# EUROPEAN PATENT APPLICATION

(11) **EP 2 085 740 A1**
(43) Date of publication of application: **05.08.2009**
(21) Application number: 07830575.2
(22) Date of filing: 25.10.2007
(51) Int. Cl.: G01B 7/30, G01B 21/22, G01D 5/244

(54) **ROTATION ANGLE DETECTING DEVICE**

(30) Priority: 25.10.2006 JP 2006290562
(71) Applicant: The Furukawa Electric Co., Ltd., Chiyoda-ku Tokyo 100-8322 (JP)
(72) Inventor: HORI, Shinji, Tokyo 1008322 (JP); TORATANI, Tomoaki, Tokyo 1008322 (JP)
(74) Representative: Kleimann, Tobias
(86) International application number: PCT/JP2007/070841
(87) International publication number: WO 2008/050843

(57) **Abstract**

A rotation angle detecting device comprises a first rotation detecting unit (50) and a second rotation detecting unit (72), that are for detecting continuously a rotation angle of a measurable rotation body (S) with different cycles between each other, wherein the individual rotation detecting units are provided for increasing and decreasing individual output signals, that are obtained in response to a rotation of the measurable rotation body, in a same direction corresponding to a rotational direction of the measurable rotation body, a difference is evaluated for between the individual output signals obtained from the first rotation detecting unit and from the second rotation detecting unit in response to the rotation of the measurable rotation body, and the output difference is used for a detection of an absolute rotation angle within a detectable rotation angle defined by a least common multiple of a cycle of a first output signal obtained from the first rotation detecting unit and a cycle of a second output signal obtained from the second rotation detecting unit. As a result, there is provided the rotation angle detecting device, for designing to reduce the number of components to comprise the rotation angle detecting device, for achieving a reduction in size regarding the rotation angle detecting device itself, and for becoming possible to detect a rotation angle in highly accurate.

## Description

### Technical field

The present invention relates to a rotation angle detecting device to be attached to a rotation body and available to be used preferably for detecting a rotation angle of such the rotation body.

### Background art

For example, there is used a so-called rotation angle detecting device in a case of detecting a rotation angle of a steering wheel as integral with a shaft to rotate, such as a steering shaft of an automobile or the like, by attaching to such the shaft (for example, refer to a patent document 1).

A rotation angle detecting device disclosed in the patent document 1 is the rotation angle detecting device for measuring a rotation angle of a primary rotation body to rotate as coupled with two of secondary rotation bodies, wherein a gear is provided in the primary rotation body and individual gears is provided also in the two of the secondary rotation bodies respectively. Moreover, the number of teeth of the gear for the primary rotation body and the number of teeth of the individual gears for the secondary rotation bodies are different from each other. Further, the gear of the primary rotation body and the gear of one of the secondary rotation bodies are meshed with each other, and the gear of the primary rotation body and the gear of another one of the secondary rotation bodies are meshed with each other as well. Furthermore, there is provided a magnet in each of the secondary rotation bodies, and two of anisotropic magnetoresistive (AMR) sensors are provided in a fixing part of the rotation angle detecting device for detecting a magnetic flux of the individual magnets.

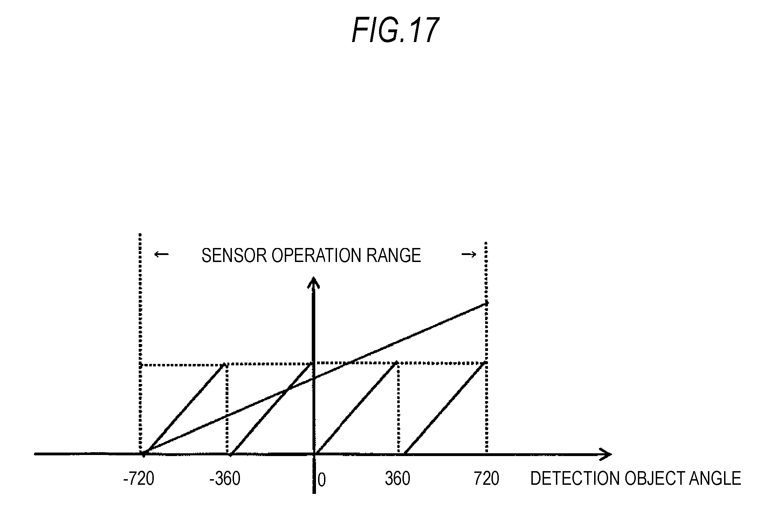

And then using such as a phase difference between detected output values having different phase for each other obtained from the two of the AMR sensors, an absolute rotation angle of the primary rotation body is to be calculated. Here, FIG. 17 shows one example regarding detection characteristics of a rotation angle according to a rotation angle detecting device of such a conventional type.

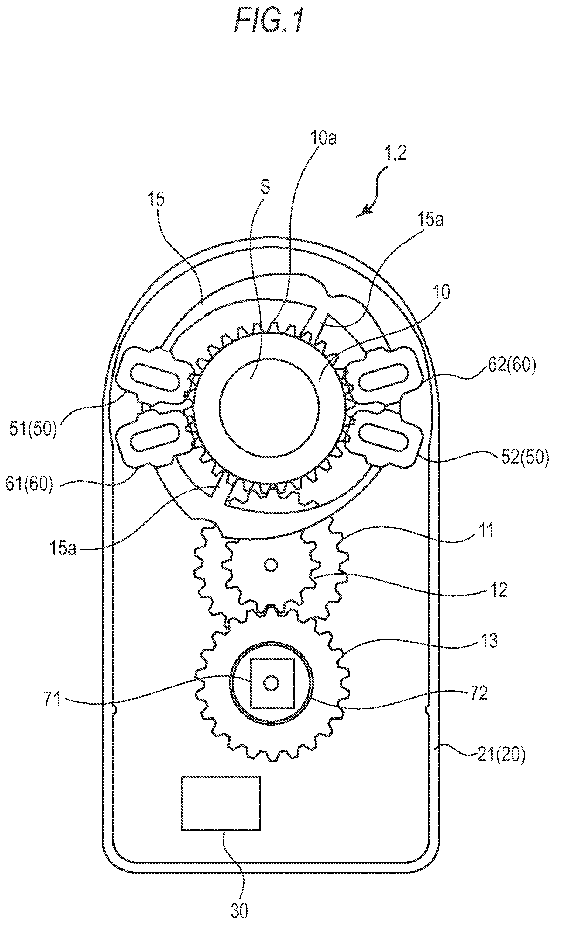

According to the configuration regarding such the rotation angle detecting device of the conventional type, a first output signal is to be obtained as periodically discriminable for an angle of not less than 0 degree but less than 360 degrees using a first rotation detecting unit, and a second output signal is to be obtained as discriminable for the number of rotation in a range of not less than 360 degrees, such as between -720 degrees and +720 degrees, using a second rotation detecting unit, as shown in FIG. 17. And then an absolute rotation angle in a range of not less than 360 degrees is to be determined by using the first output signal and the second output signal. In such the case, the first output signal becomes to be a periodic signal within a range for determining an angle, such as between -720 degrees and +720 degrees, as shown in the same figure, however, on the contrary, the second output signal does not become to be a periodic signal within the range for determining the angle.
[Patent Document 1] Japanese Patent Application Publication No. 2001-505667 (claims 6 to 10, FIG. 1)

### Disclosure of the invention

### Problems to be solved by the invention

Here, it is necessary to widen a range for the second output signal to be varied therein for widening a range to be able to determine the absolute rotation angle using the rotation angle detecting device as wider than 360 degrees, however, it is required to design a reduction ratio as large regarding a mechanical connection between an angle detection object and an angle detecting part for realizing such the state.

In such the case, it may be able to consider that a rotation of a measurable rotation body is to be reduced via a gear for example, for obtaining the first output signal from the first rotation detecting unit, and for obtaining also the second output signal from the second rotation detecting unit. However, in the case of reducing via the gear with a reduction ratio to be larger, it is required to comprise a reducing mechanism using a multi-stage gear meshed a plurality of gears for ensuring a detection range for a rotation angle, as it is not sufficient with using a one-stage gear or a two-stage gear. Moreover, there is occurred a problem that the number of components becomes to be increased, and then a whole structure of the rotation angle detecting device becomes to be larger, according to such the requirement. However, it is necessary to widen a detection range for the second output signal for determining the number of rotation as many as possible for the first output signal, and then it cannot help but be required to increase the parts count of the reducing mechanism part. As a result, the size of the rotation angle detecting device itself is remained to be still large.

An object of the present invention is to provide a rotation angle detecting device, for designing to reduce the number of components to comprise the rotation angle detecting device, for achieving a reduction in size regarding the rotation angle detecting device itself, and for becoming possible to detect a rotation angle in a wide angle range.

### Means for solving the problem

For solving the above described problems, a rotation angle detecting device according to the present invention is **characterized in that** the rotation angle detecting device comprises:
a first rotation detecting unit;
a second rotation detecting unit,
that are for detecting continuously a rotation angle of a measurable rotation body with different cycles between each other; and
an operation unit for determining the rotation angle of the measurable rotation body by an operation using a first output signal generated by the first rotation detecting unit and a second output signal generated by the second rotation detecting unit, wherein both of the first output signal and the second output signal are periodic signals, a cycle of the first output signal and a cycle of the second output signal are different from each other,
the first rotation detecting unit and the second rotation detecting unit are provided for increasing and decreasing the individual output signals, that are obtained in response to a rotation of the measurable rotation body, in a same direction corresponding to a rotational direction of the measurable rotation body,
the operation unit evaluates a difference by the operation for between the first output signal and the second output signal in response to the rotation of the measurable rotation body, and the operation unit performs a detection of an absolute rotation angle of the measurable rotation body using the difference and within a detectable rotation angle defined by a least common multiple of the cycle of the first output signal and the cycle of the second output signal.

According to the rotation angle detecting device regarding the present invention, both of the first output signal obtained from the first rotation detecting unit and the second output signal obtained from the second rotation detecting unit are to be the periodic signals, the cycle of the individual signals regarding the first output signal and the second output signal is to be different from each other, the difference between the first output signal and the second output signal is to be evaluated using the operation unit, the number of rotation is to be determined for the measurable rotation body using such the difference, and then an algorithm is to be executed for performing the detection of the absolute rotation angle of the measurable rotation body within the detectable rotation angle defined by the least common multiple of the cycle of the first output signal obtained from the first rotation detecting unit and the cycle of the second output signal obtained from the second rotation detecting unit.

By providing a rotation angle detecting device to execute such the algorithm for determining the rotation angle regarding the rotation angle detecting device according to the present invention, it becomes able to simplify a configuration of a revolution reducing mechanism existing between the first rotation detecting unit and the second rotation detecting unit in the rotation angle detecting device, it becomes able to design to reduce the number of components to comprise the rotation angle detecting device thereby, and then it becomes able to relax design limitations regarding a reduction in size for the rotation angle detecting device itself and regarding a whole structure of the rotation angle detecting device.

Moreover, the rotation angle detecting device according to claim 2 is **characterized in that** regarding the rotation angle detecting device according to claim 1,
wherein an (A - B) is evaluated using output differences obtained from the first output signal and the second output signal, that are the closest to each other as to be the A and the B among the obtained output differences,
integer values are obtained by dividing the individual output differences by the (A - B) and by rounding off therefor,
an error of the detection angle is cancelled, which is included in a difference between the first output signal obtained from the first rotation detecting unit and the second output signal obtained from the second rotation detecting unit, based on the integer values obtained thereby, and
a simplification is designed regarding a detection process for the absolute rotation angle.

In the case where the output differences as closest to each other are to be the A and the B in such a way, the (A - B) is to be evaluated, the integer values are to be obtained by dividing the individual output differences by such the (A - B) and by rounding off therefor. And then by using such the integer values, it becomes able to cancel the error of the signal (the error of the detection angle) included in the difference between the first output signal and the second output signal, and it becomes able to perform easily regarding the process for the calculation of the absolute rotation angle.

Moreover, a rotation angle detecting device according to claim 3 is **characterized in that** the rotation angle detecting device further comprising:
a first rotation detecting unit;
a second rotation detecting unit,
that are for detecting continuously a rotation angle of a measurable rotation body with different cycles between each other; and
an operation unit for determining the rotation angle of the measurable rotation body by an operation using a first output signal generated by the first rotation detecting unit and a second output signal generated by the second rotation detecting unit,
wherein both of the first output signal and the second output signal are periodic signals, a cycle of the first output signal and a cycle of the second output signal are different from each other,
the first rotation detecting unit and the second rotation detecting unit are provided for increasing and decreasing the individual output signals, that are obtained in response to a rotation of the measurable rotation body, in an opposite direction corresponding to a rotational direction of the measurable rotation body,
the operation unit evaluates a finite sum by the operation for between the first output signal and the second output signal in response to the rotation of the measurable rotation body, and the operation unit performs a detection of an absolute rotation angle of the measurable rotation body using the difference and within a detectable rotation angle defined by a least common multiple of the cycle of the first output signal and the cycle of the second output signal.

Even in a case of decreasing the second output signal according to an increase of the first output signal and of increasing the second output signal according to a decrease of the first output signal, by evaluating the finite sum of the individual output signals obtained from the first rotation detecting unit and from the second rotation detecting unit in response to the rotation of the measurable rotation body, it becomes able to obtain functions as similar to that according to claim 1, that is to say, it becomes able to simplify the configuration of the revolution reducing mechanism existing between the first rotation detecting unit and the second rotation detecting unit in the rotation angle detecting device, it becomes able to design to reduce the number of components to comprise the rotation angle detecting device thereby, and then it becomes able to relax the design limitations regarding the reduction in size for the rotation angle detecting device itself and regarding the whole structure of the rotation angle detecting device.

Moreover, the rotation angle detecting device according to claim 4 is **characterized in that** regarding the rotation angle detecting device according to claim 3,
wherein a (C - D) is evaluated using output sums obtained from the first output signal and the second output signal, that are the closest to each other as to be the C and the D among the obtained output sums,
integer values are obtained by dividing the individual output sums by the (C - D) and by rounding off therefor,
an error of the detection angle is cancelled, which is included in a finite sum of the first output signal obtained from the first rotation detecting unit and the second output signal obtained from the second rotation detecting unit, based on the integer values obtained thereby, and
a simplification is designed regarding a detection process for the absolute rotation angle.

Even in a case of decreasing the second output signal according to an increase of the first output signal and of increasing the second output signal according to a decrease of the first output signal, in the case where the output sums as closest to each other are to be the C and the D, the (C - D) is to be evaluated, the integer values are to be obtained by dividing the individual output sums by such the (C - D) and by rounding off therefor. And then by using such the integer values, it becomes able to cancel the error of the signal (the error of the detection angle) included in the finite sum of the first output signal and the second output signal, and it becomes able to perform easily regarding the process for the calculation of the absolute rotation angle.

Moreover, a rotation angle detecting method according to claim 5 is **characterized in that** the rotation angle detecting method for determining a rotation angle of a measurable rotation body by an operation using a first rotation detecting unit and a second rotation detecting unit, that are for detecting continuously the rotation angle of the measurable rotation body with different cycles between each other, and further using a first output signal generated by the first rotation detecting unit and a second output signal generated by the second rotation detecting unit, wherein both of the first output signal and the second output signal are periodic signals, a cycle of the first output signal and a cycle of the second output signal are different from each other, and the first output signal and the second output signal are changed for increasing and decreasing in a same direction corresponding to a rotational direction of the measurable rotation body respectively, comprising the steps of: evaluating a difference between the first output signal and the second output signal;
determining the number of rotation for the measurable rotation body using the difference; and
performing a detection of an absolute rotation angle of the measurable rotation body within a detectable rotation angle defined by a least common multiple of the cycle of the first output signal and the cycle of the second output signal.

According to the rotation angle detecting method regarding the present invention, both of the first output signal obtained from the first rotation detecting unit and the second output signal obtained from the second rotation detecting unit are to be the periodic signals, the cycle of the individual signals regarding the first output signal and the second output signal is to be different from each other, the difference between the first output signal and the second output signal is to be evaluated, the number of rotation is to be determined for the measurable rotation body using such the difference, and then an algorithm is to be executed for performing the detection of the absolute rotation angle within the detectable rotation angle defined by the least common multiple of the cycle of the first output signal obtained from the first rotation detecting unit and the cycle of the second output signal obtained from the second rotation detecting unit. Thus, it becomes able to detect a rotation angle of a measurable rotation body in a wide angle range even for a rotation angle detecting device to be reduced in size thereof.

Moreover, a rotation angle detecting method according to claim 6 is **characterized in that** the rotation angle detecting method for determining a rotation angle of a measurable rotation body by an operation using a first rotation detecting unit and a second rotation detecting unit, that are for detecting continuously the rotation angle of the measurable rotation body with different cycles between each other, and further using a first output signal generated by the first rotation detecting unit and a second output signal generated by the second rotation detecting unit, wherein both of the first output signal and the second output signal are periodic signals, a cycle of the first output signal and a cycle of the second output signal are different from each other, and the first output signal and the second output signal are changed for increasing and decreasing in an opposite direction corresponding to a rotational direction of the measurable rotation body respectively, further comprising the steps of:
evaluating a finite sum of the first output signal and the second output signal;
determining the number of rotation for the measurable rotation body using the finite sum; and
performing a detection of an absolute rotation angle of the measurable rotation body within a detectable rotation angle defined by a least common multiple of the cycle of the first output signal and the cycle of the second output signal.

According to the rotation angle detecting method regarding the present invention, even in a case of decreasing the second output signal according to an increase of the first output signal and of increasing the second output signal according to a decrease of the first output signal, by evaluating the finite sum of the individual output signals obtained from the first rotation detecting unit and from the second rotation detecting unit in response to the rotation of the measurable rotation body, it becomes able to detect a rotation angle of a measurable rotation body in a wide angle range even for a rotation angle detecting device to be reduced in size thereof, as similar to the invention according to claim 5.

### Brief description of the drawings

FIG. 1 is a plan view showing a rotation angle detecting device according to the first embodiment regarding the present invention, in a state as seeing through a top case.

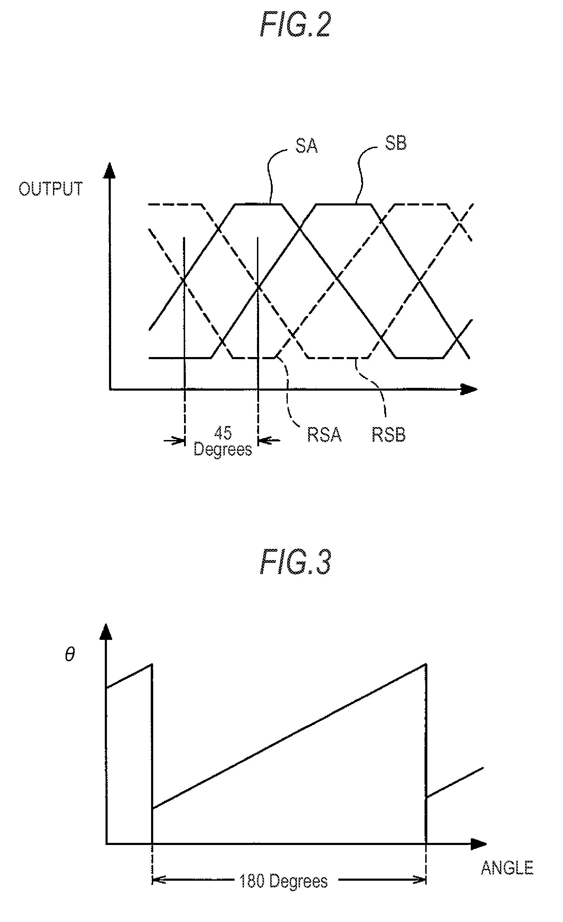

FIG. 2 is a diagram showing an evaluating method for a rotation angle periodically repeated, using the first rotation detecting unit as shown in FIG. 1.
FIG. 3 is a diagram showing the evaluating method for the rotation angle periodically repeated, using the first rotation detecting unit, following FIG. 2.

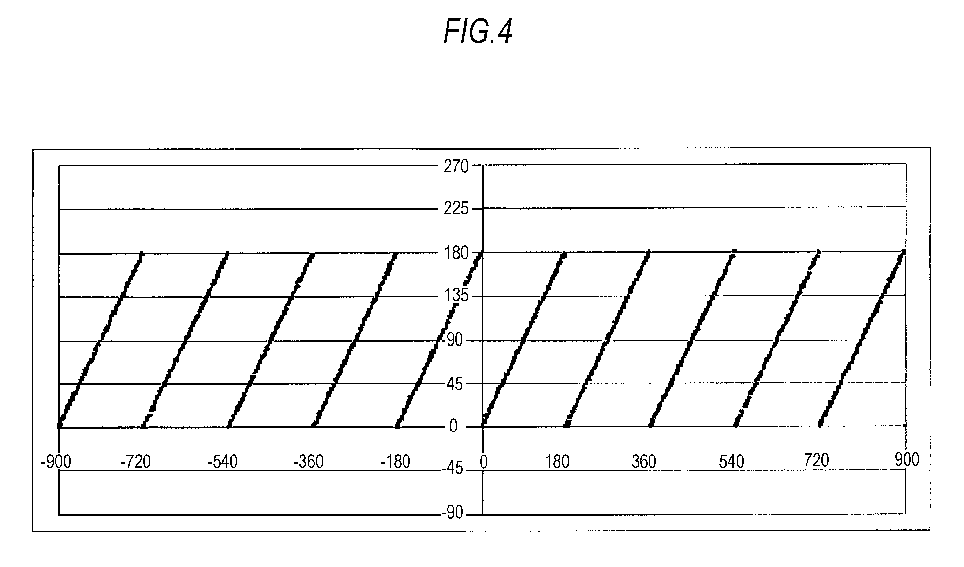

FIG. 4 is a diagram showing a detection result of a rotation angle detected from the first rotation detecting unit according to the first embodiment, wherein a horizontal axis indicates a detectable rotation angle defined by a least common multiple of a cycle of a first rotation detecting unit and a cycle of a second rotation detecting unit, and a vertical axis indicates a rotation angle periodically repeated and detected from the first rotation detecting unit.

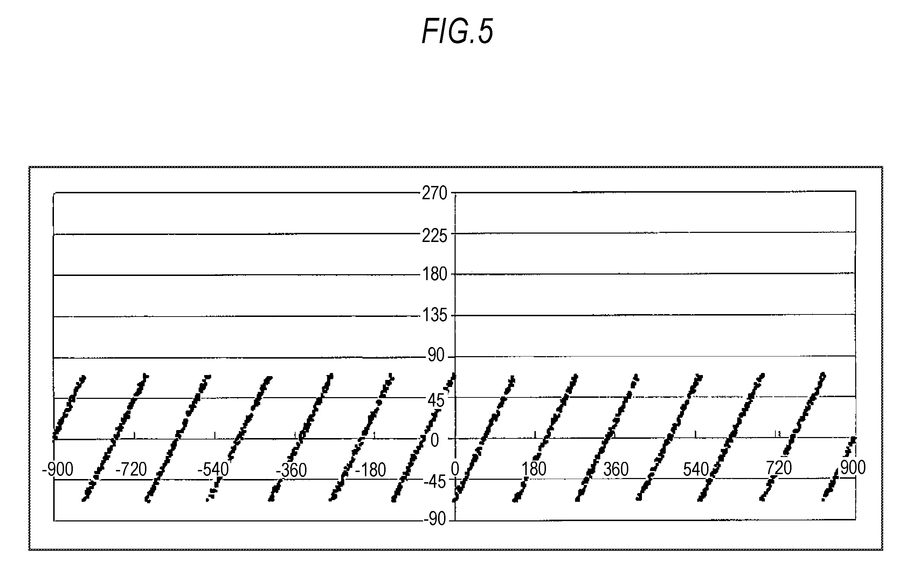

FIG. 5 is a diagram showing a detection result of a rotation angle detected from the second rotation detecting unit according to the first embodiment, wherein a horizontal axis indicates a detectable rotation angle defined by a least common multiple of a cycle of a first rotation detecting unit and a cycle of a second rotation detecting unit, and a vertical axis indicates a rotation angle periodically repeated and detected from the second rotation detecting unit.

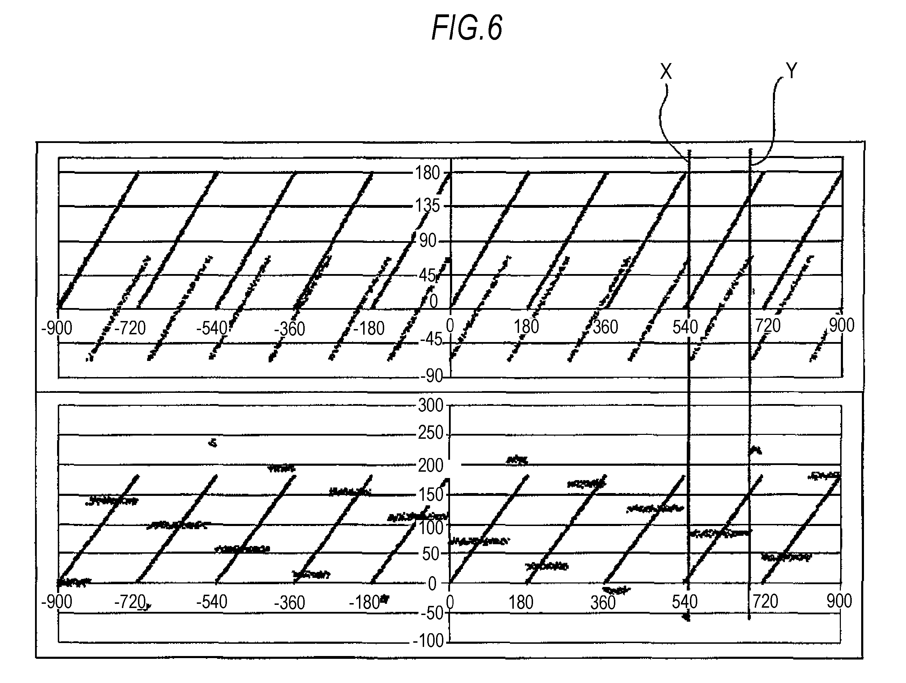

FIG. 6 is an output characteristic diagram showing at an upper part thereof with superimposing the detection result as shown in FIG. 4 and the detection result as shown in FIG. 5, and showing at a lower part thereof with superimposing a value, as subtracting the rotation angle detected from the second rotation detecting unit as shown in FIG. 5 from the rotation angle detected from the first rotation detecting unit as shown in FIG. 4, on the detection result as shown in FIG. 4, wherein a horizontal axis indicates a detectable rotation angle regarding the rotation angle detecting device according to the present embodiment as shown in FIG. 1, and a vertical axis indicates a rotation angle periodically repeated and detected from the first rotation detecting unit, with superimposing a value, as subtracting the rotation angle detected from the second rotation detecting unit from the rotation angle detected from the first rotation detecting unit, thereon as shown in FIG. 4.

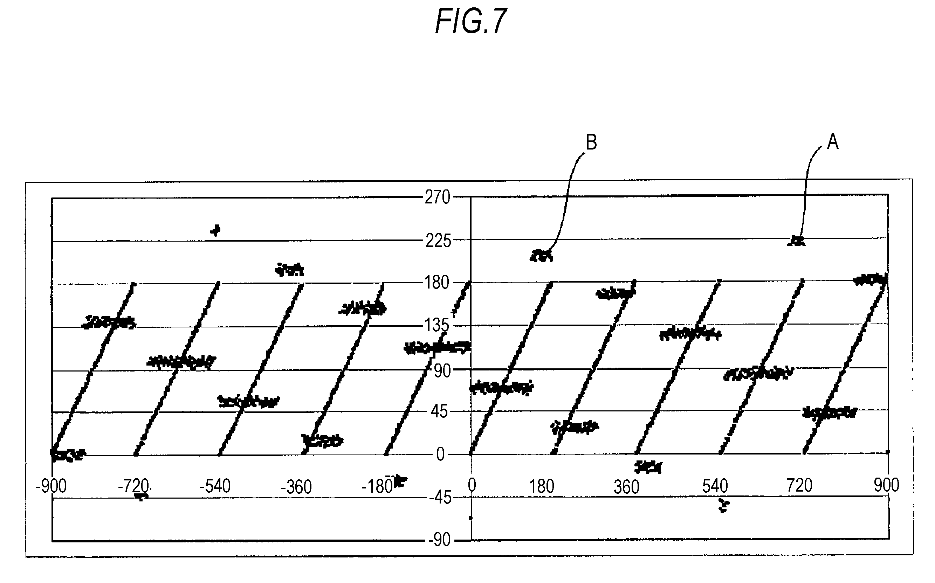

FIG. 7 is an enlarged diagram of only the lower part as shown in FIG. 6, wherein a horizontal axis indicates a detectable rotation angle regarding the rotation angle detecting device according to the present embodiment as shown in FIG. 1, and a vertical axis indicates a rotation angle detected from the first rotation detecting unit, with the subtracted value.

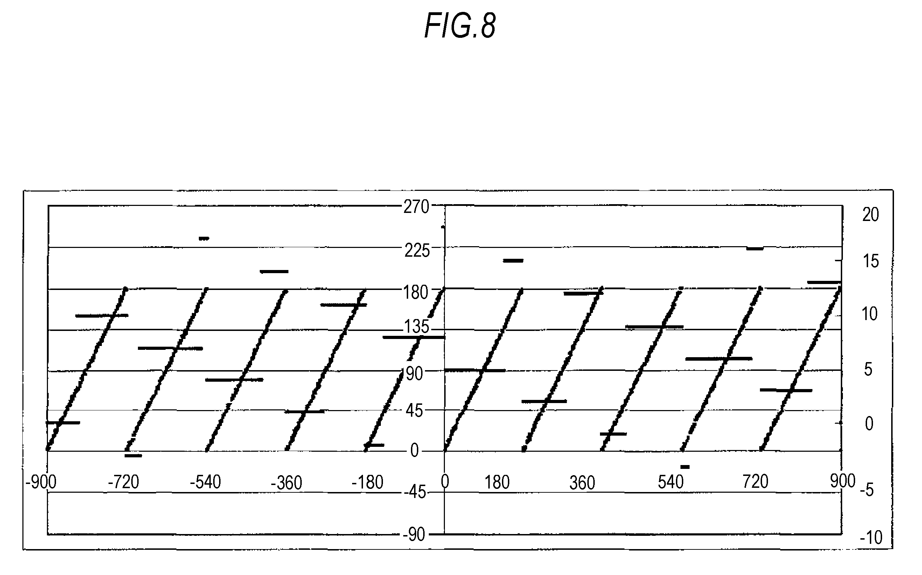

FIG. 8 is a diagram showing a value divided the subtracted values obtained in the random stepped pattern using the smallest difference among differences of the subtracted values obtained in the random stepped pattern as shown in FIG. 7, and then converted to an integer value by rounding off therefor, with superimposing the detection result as shown in FIG. 4, wherein a horizontal axis indicates a detectable rotation angle regarding the rotation angle detecting device according to the present embodiment as shown in FIG. 1, and a vertical axis at the center indicates a rotation angle periodically repeated and detected from the first rotation detecting unit and the subtracted value, with an axis at the right side indicates the value converted to the integer value.

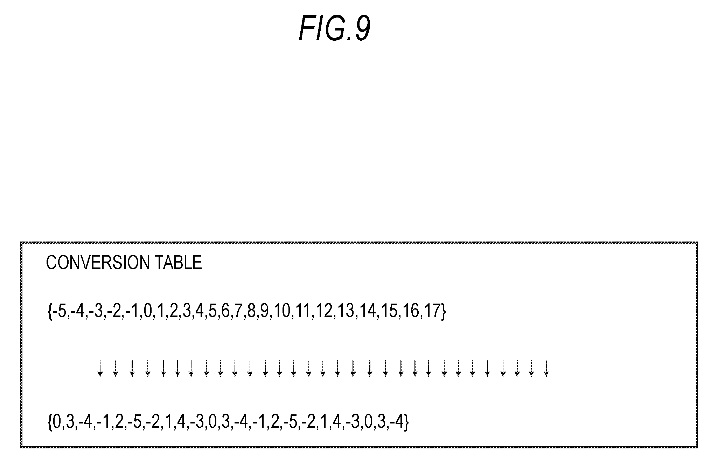

FIG. 9 is a conversion table for rearranging in a staircase pattern regarding integer values arranged at random as shown in FIG. 8.

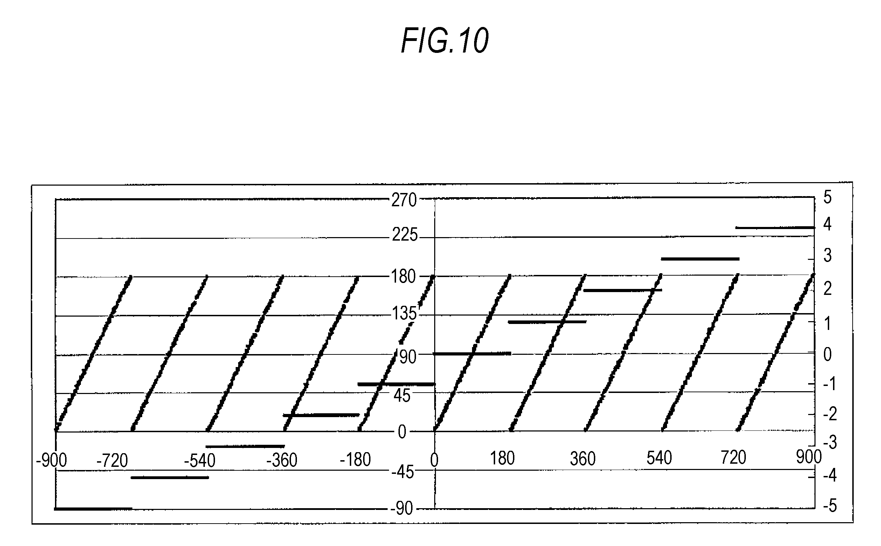

FIG. 10 is an output characteristic diagram showing a rearrangement in a staircase pattern regarding the integer values as shown in FIG. 8 using the conversion table as shown in FIG. 9.

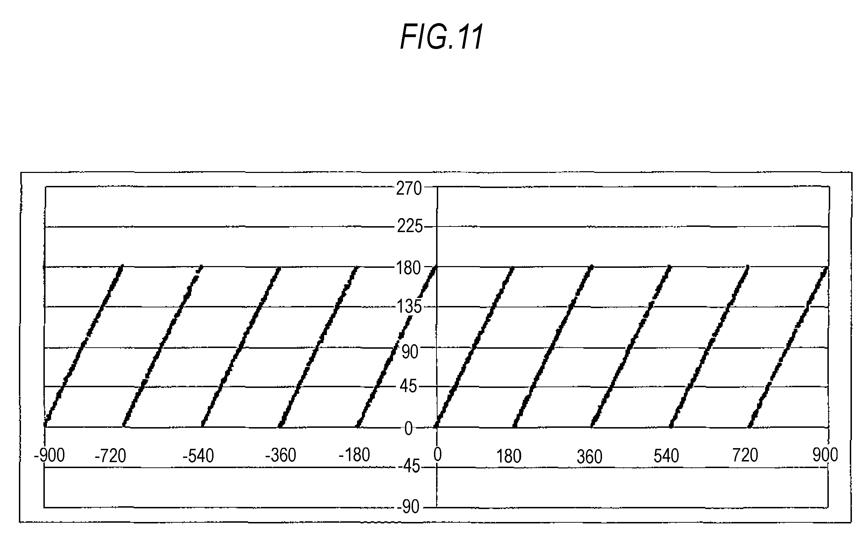

FIG. 11 is a diagram showing a detection result of a rotation angle detected from the first rotation detecting unit according to the second embodiment, wherein a horizontal axis indicates a detectable rotation angle defined by a least common multiple of a cycle of a first rotation detecting unit and a cycle of a second rotation detecting unit, and a vertical axis indicates a rotation angle periodically repeated and detected from the first rotation detecting unit.

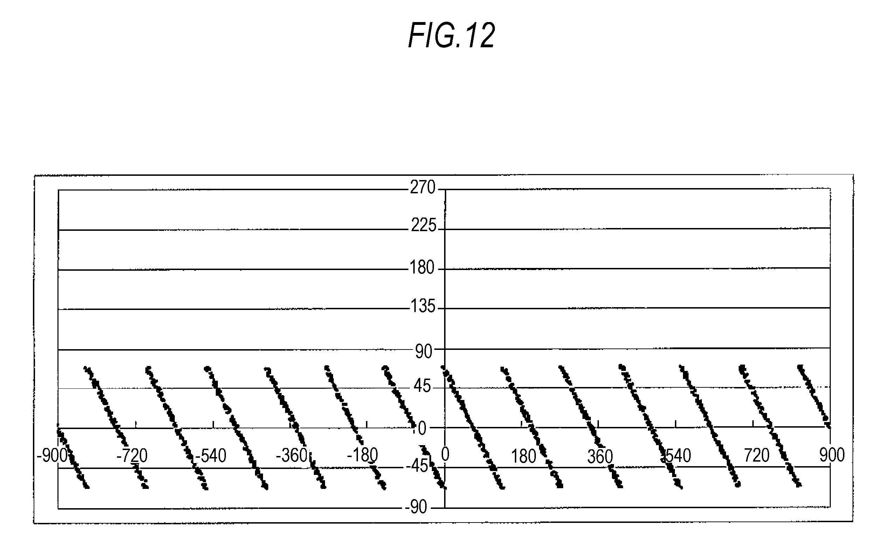

FIG. 12 is a diagram showing a detection result of a rotation angle detected from the second rotation detecting unit according to the second embodiment, wherein a horizontal axis indicates a detectable rotation angle defined by a least common multiple of a cycle of a first rotation detecting unit and a cycle of a second rotation detecting unit, and a vertical axis indicates a rotation angle periodically repeated and detected from the second rotation detecting unit.

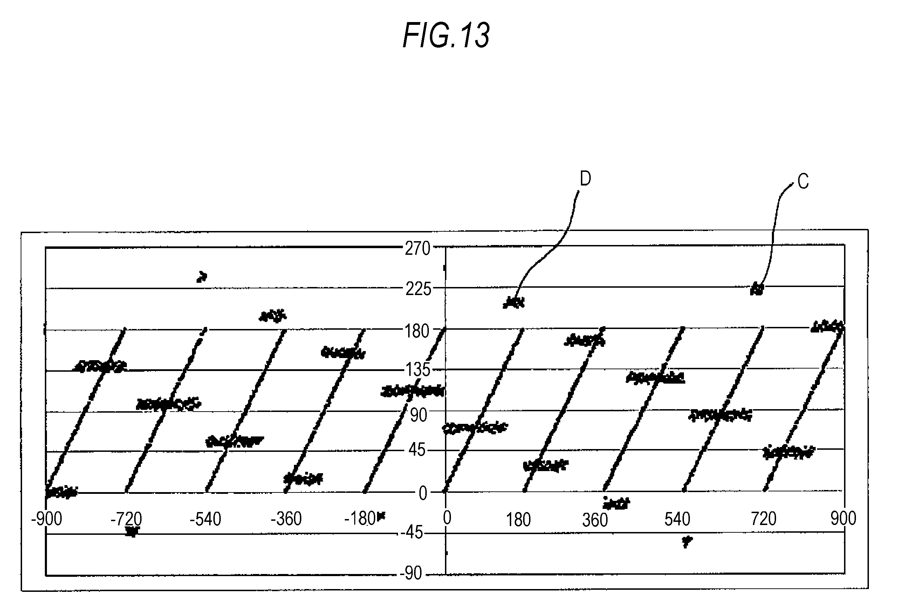

FIG. 13 is an output characteristic diagram showing a value added the rotation angle detected from the first rotation detecting unit as shown in FIG. 11 and the rotation angle detected from the second rotation detecting unit with superimposing the detection result as shown in FIG. 11, wherein a horizontal axis indicates a detectable rotation angle regarding the rotation angle detecting device according to the present embodiment as shown in FIG. 1, and a vertical axis indicates a rotation angle periodically repeated and detected from the first rotation detecting unit, with the value added the rotation angle detected from the first rotation detecting unit and the rotation angle detected from the second rotation detecting unit.

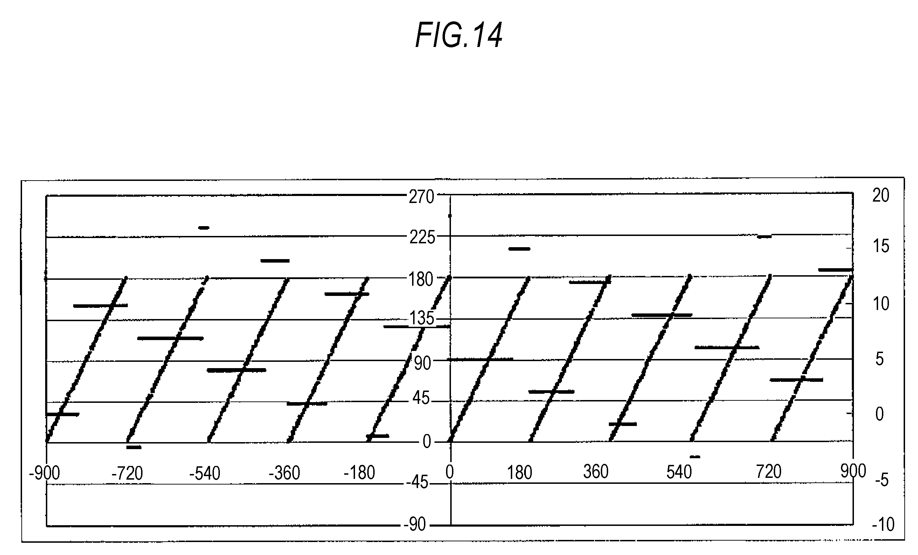

FIG. 14 is a diagram showing a value divided the added values obtained in the random stepped pattern using the smallest difference among differences of the added values obtained in the random stepped pattern as shown in FIG. 13, and then converted to an integer value by rounding off therefor, with superimposing the detection result as shown in FIG. 11, wherein a horizontal axis indicates a detectable rotation angle regarding the rotation angle detecting device according to the present embodiment as shown in FIG. 1, and a vertical axis at the center indicates a rotation angle periodically repeated and detected from the first rotation detecting unit and the added value, with an axis at the right side indicates the value converted to the integer value.

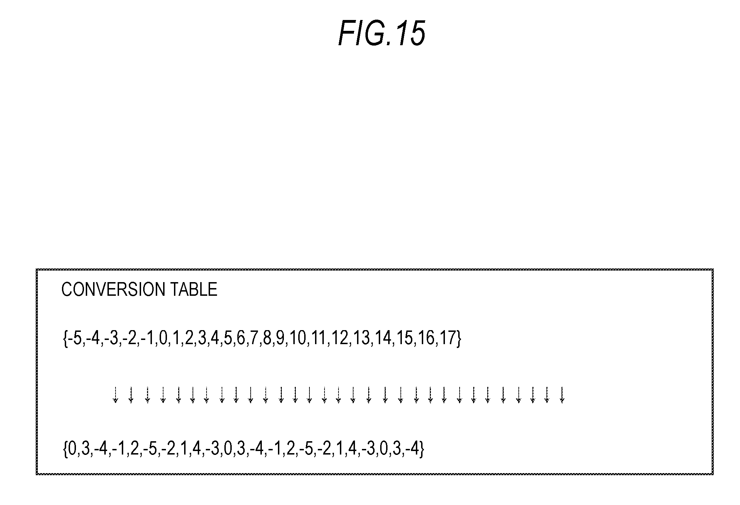

FIG. 15 is a conversion table for rearranging in a staircase pattern regarding integer values arranged at random as shown in FIG. 14.

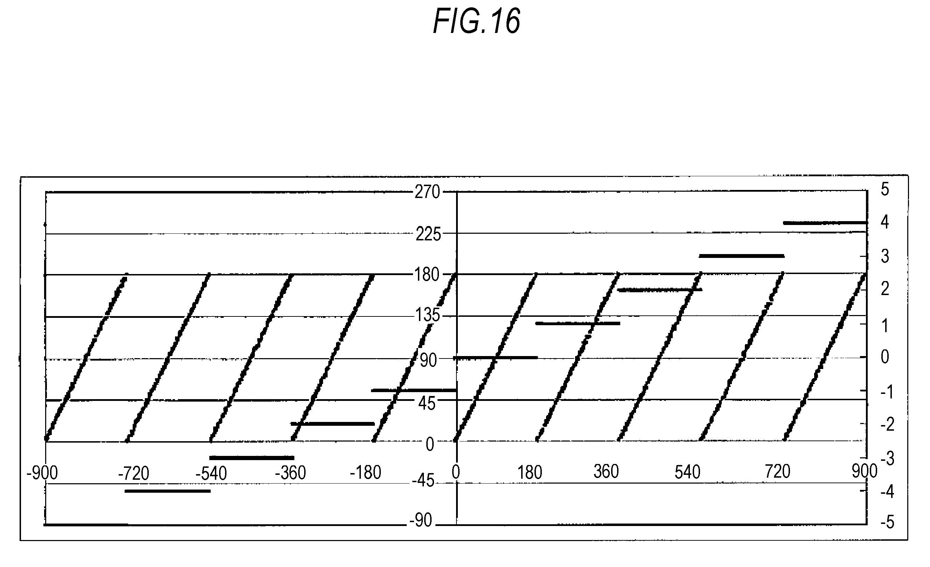

FIG. 16 is an output characteristic diagram showing a rearrangement in a staircase pattern regarding the integer values as shown in FIG. 14 using the conversion table as shown in FIG. 15.
FIG. 17 is a diagram showing detection results of rotation angles detected from a first rotation detecting unit and from a second rotation detecting unit according to a conventional rotation angle detecting device, wherein a horizontal axis indicates a detectable rotation angle by using a combination of the first rotation detecting unit and the second rotation detecting unit, and a vertical axis indicates rotation angles detected from the first rotation detecting unit and from the second rotation detecting unit respectively.

### Best mode for carrying out the invention

A rotation angle detecting device according to the first embodiment regarding the present invention will be described in detail below, based on the drawings. Here in the present embodiment, there is described a case where such the rotation angle detecting device is to be attached to a steering shaft for detecting a rotation angle of a steering wheel regarding a steering device of an automobile.

The rotation angle detecting device 1 according to the first embodiment regarding the present invention comprises: a rotor 10 engaged in a steering shaft S (simply referred to as a shaft S hereinafter) as a measurable rotation body and comprising a gear part 10a at a peripheral part thereof to mesh with a first gear 11; a second gear 12 to rotate as integral with the first gear 11 with having a concentricity therewith; a third gear 13 to mesh with the second gear 12; a bottom case 21 to support the rotor 10, the first gear 11, the second gear 12 and the third gear 13 as rotatable; a top case (not shown in the figures) engaged with the bottom case 21 to be a boxing case 20; and an operation unit 30 to execute an algorithm for detecting a rotation angle regarding the present invention, as shown in FIG. 1 and FIG. 2.

Moreover, the rotor 10 is made from a synthetic resin as superior in strength and formability, wherein a support part 15a is extended from a predetermined position around the rotor 10, and a rotor shield member 15 of plate shape, with a plate thickness of approximately 0.5 mm for example, is provided as a ring shape around the rotor 10 via such the support part 15a. Further, the rotor shield member 15 is made from an electrical conductive member, such as a brass, a silver, an aluminum, a copper, or the like, and then a width thereof is to be changed regularly, from 2 mm to 5 mm for example, in every 180 degrees in a circumferential direction according to the present embodiment. By changing the width of the rotor shield member 15 in every 180 degrees in a circumferential direction in such a way, it is designed to obtain a variation of a detection signal from coil members 50 and 60 as large in response to an actual rotation angle of the rotor 10.

Still further, the top case as not shown in the figures and the bottom case 21 are made of a shield member made from a metal or an insulating magnetic material as superior in strength and having a shielding property for an alternating magnetic field, and then the top case and the bottom case 21 form a housing in cooperation therebetween to pack the rotor 10, the shield member 15, the first gear 11, the second gear 12 and the third gear 13. Still further, there is provided a connector (not shown in the figure) in the bottom case 21, for supplying a power to the rotation angle detecting device 1, and for transmitting outward a detection signal from the rotation angle detecting device 1.

Still further, there is provided two pairs of coil members 50 and 60 at the top case and the bottom case 21 as shown in FIG. 1. Regarding such the individual pairs of coil members 50 and 60, the coil member 50 as one pair is comprised of coil members 51 and 52 arranged with a predetermined angle in a circumferential direction on a vertical plane to a rotation axis, and such the coil members 51 and 52 are attached to be placed opposite therebetween with spacing a predetermined distance for the vertical plane to the rotation axis of the rotor shield member 15 in the rotor 10 respectively. Still further, the rotor shield member 15, the coil members 50 and 60 comprise a first detecting unit in cooperation therebetween. Still further, the coil member 60 as another pair is comprised of coil members 61 and 62 arranged with a predetermined angle in a circumferential direction on a plane for sensing, and such the coil members 61 and 62 are attached to be placed opposite therebetween with spacing a predetermined distance for the vertical plane to the rotation axis of the rotor shield member 15 in the rotor 10 respectively.

Furthermore, regarding such the two pairs of coil members 50 and 60, each of the coil members 50 and 60 is attached with a predetermined angle in a circumferential direction for the rotor shield member 15 as shown in FIG. 1, for shifting output values of individual phase shift amounts as 45 degrees to each other regarding each of the coil members as described below, and then each of peripheral edges is to be a so-called track shape for track and field sports from a view point of a planar view as shown in FIG. 1.

The reason for such the arrangement of the coil member 50 as the one pair and the coil member 60 as the other pair with the two pairs in total is to perform rapidly an detection of abnormality regarding the rotation angle detecting device 1 with comparing outputs from the coil members 51 and 61 as the one pair and outputs from the coil members 52 and 62 as the other pair, or to complement with each other at the period of detecting a rotation angle regarding a impossible region for detecting the rotation angle to be formed by a portion of the support part 15a provided in a circumferential direction at a part of the rotor shield member 15. Here, a basic configuration of the coil member 50 as the one pair and that of the coil member 60 as the other pair is the same, and then the individual coil members 50 and 60 will be described both at the same time as below.

According to the present embodiment, the coil member 50 (51 and 52) as the one pair is to be arranged for shifting phases of 45 degrees therebetween, and the coil member 60 (61 and 62) as the other pair with shifting a predetermined angle in a circumferential direction in a same way, with one cycle for the rotor shield member 15 as 180 degrees as described below.

Moreover, each of the coil members 50 and 60 comprises a core main body made from a soft magnetic material of insulating, such as a plastic magnet (for example, a mixed soft magnetic material in which an Mn-Zn based soft magnetic ferrite is mixed into a polyphenylene sulfide (PPS) or the like), and exciting coils to be rolled around inner circumference ditch of track shape formed along a peripheral part of the core main body and to be packed into the core main body inside.

Further, the exciting coils are to be faced to each other with sandwiching the rotor shield member 15 therebetween, and are to be connected in series to therebetween respectively, and then electrically connected to a conductive pattern on a printed circuit board on which the operation unit 30 is mounted in this case in the case inside. Still further, the exciting coil forms an alternating magnetic field at a surrounding thereof by being flowed an alternating exciting current, and then the alternating magnetic fields are to be crossed thereby for a sensing surface of the rotor shield member at between the core main bodies to be paired respectively.

Still further, an eddy current occurs in the rotor shield member 15 as the electrically conductive member due to the alternating magnetic field generated by the coil members 50 and 60, and then such the occurred eddy current varies in response to a change in width of the rotor shield member 15 corresponding to the rotation of the rotor 10. Furthermore, a rotation angle of the rotor 10 is to be detected by the individual coil members 50 and 60 with a cycle of 180 degrees, by detecting a variation of impedance based thereon.

Here, the reason for the coil members 50 and 60 to be placed opposite therebetween for every pair thereof with sandwiching the rotor shield member 15 is to be able to compensate a variation of output regarding each of the coil members 50 and 60 if the outputs from the two pairs of coil members 50 and 60 as facing each other are to be detected, because the output from each of the coil members 50 and 60 is varied according to a change in the position of the rotor 10 toward an axis direction of the shaft S due to a vibration or the like, and then for example the output from the other pair of coil member 50 or 60 is to be decreased corresponding to an increase of the output from either one pair of coil member 50 or 60.

Next, a signal processing method for detecting the rotation angle of such the rotor 10 will be described in detail below. Here, a circuit for executing such the signal processing method is to be provided in the operation unit 30, however, individual configurations regarding such the circuit is omitted to be shown in the figures. In the case of performing such the signal processing, first, an oscillation circuit outputs an oscillation signal with a predetermined frequency to a phase shift unit comprised of a resistance, an exciting coil and a condenser, via a demultiplier circuit. At the period thereof, the impedance of the individual exciting coils is to be varied in response to the magnitude of the eddy current occurred in the rotor shield member 15, and then a phase of a voltage signal at both edges of the individual condensers is to be varied as well. Next, the voltage signal at the both edges of the condenser is to be output to a phase shift amount detecting unit, and then the phase shift amount of the voltage signal at the both edges of the individual condensers is to be detected by such the detecting unit. Moreover, a converter converts the detected phase shift amount to a corresponding voltage value.

Here, according to the present embodiment, it becomes able to obtain output values for the phase shift amounts with a cycle of 180 degrees and with phases shifted as 45 degrees for each other, such as between an output value SA for the phase shift amount of the coil member 50 as the one pair and an output value SB for the phase shift amount of the coil member 60 as the other pair as shown in FIG. 2, by the above mentioned signal processing, because the coil members 50 and 60 are arranged as corresponding to a circumferential direction of the rotor shield member 15, for the phase of the output signal for the phase shift amount to be shifted as 45 degrees, which is to be obtained by the individual coil members 50, 60 and the rotor shield member 15 in cooperation therebetween.

The following is a method for detecting a rotation angle of the rotor 10 with a cycle of 180 degrees using the output value for the phase shift amount to be obtained in such a way.

First, the output values (SA and SB) for the rotation angle of the rotor 10 obtained from the individual coil members 50 and 60 and output values (RSA and RSB) as individually reversed from such the values are to be superimposed, as shown in FIG. 2. Next, the rotation angle of the rotor 10 is to be determined as in which range of between 0 degree and 45 degrees, between 45 degrees and 90 degrees, between 90 degrees and 135 degrees, or between 135 degrees and 180 degrees, using a magnitude correlation between the individual detection values for the phase shift amounts. Next, linear parts regarding four of such the detection values for the phase shift amounts are to be used, and then such the linear parts are to be joint (coupling) processed for each other. And then the rotation angle of the rotor 10 is to be evaluated in a cycle of 180 degrees using output signals of sawtooth waveform to be varied in a cycle of 180 degrees as shown in FIG. 3 and FIG. 4, based on the determined result to be in which angle range regarding the above mentioned four of the angle ranges.

While, at the bottom case 21, there is provided a magnet 71 to rotate as integral with the third gear 13 at the central part of the third gear 13, and then a magnetoresistive (MR) element 72 as a magnetic flux detection element is provided for detecting a magnetic flux of the magnet 71 at a part for facing to such the magnet 71 on the bottom case 21, as shown in FIG. 1. Moreover, such the magnet 71 and the MR element 72 comprise a second detecting unit in cooperation therebetween.

Moreover, the MR element 72 is to be obtained with a detection output thereof as the detection output of sine curve form and the detection output of cosine curve form, and then such the detection outputs are converted to a detection output of tangent function to be output as an output signal of sawtooth waveform to vary in a cycle of between -69.2 degrees and +69.2 degrees, that is to say, every 138.4 degrees, as shown in FIG. 5. Here, such the signal processing method is heretofore known as disclosed in Japanese Patent Application Publication No. 2004-053444 for example. The reason that the cycle of the detection output of the MR element 72 is to be as such the 138.4 degrees is because individual reduction ratios is to be defined beforehand regarding the number of teeth provided at the peripheral part of the rotor 10, the number of teeth for the first gear 11 to mesh therewith, the number of teeth for the second gear 12 to be concentric with the first gear 11 and to rotate as integral therewith, and the number of teeth for the third gear 13 to mesh with the second gear 12. And then due to the correlation of such the gear ratios, the cycle of the detection signal for the MR element 72 to be detected in response to the rotation of the second gear 12 becomes to be 138.4 degrees.

As described above, according to the rotation angle detecting device 1 regarding the present embodiment, the first detection signal obtained from the first detecting unit to be comprised of the coil members 50, 60 and the rotor shield member 15 in cooperation therebetween becomes to be output with the cycle of 180 degrees in response to the rotation of the rotor 10 (refer to FIG. 4), and the second detection signal obtained from the second detecting unit to be comprised of the magnet 71 and the MR element 72 in cooperation therebetween becomes to be output with the cycle of 138.4 degrees in response to the rotation of the second gear 12 (refer to FIG. 5). That is to say, according to the present embodiment, in the case where the output signal regarding the coil members 50 and 60 increases (decreases) according to the rotation of the shaft S as the measurable rotation body, the output signal regarding the MR element 72 is designed to be increased (decreased) as well. And then according to the rotation angle detecting device 1 regarding the present invention, the absolute rotation angle becomes to be evaluated within the detectable rotation angle of between 0 degree and 1800 degrees (between -900 degrees and +900 degrees) as a least common multiple of the cycles of such the detection signals.

A method (an algorithm) for evaluating an absolute rotation angle in a range of between 0 degree and 1800 degrees (between -900 degrees and +900 degrees) using such the configuration will be described in detail below.

First, a method for evaluating an absolute rotation angle using the rotation angle detecting device 1 according to the present embodiment will be described in detail below. At the first step, a range of the detectable rotation angle due to such the rotation angle detecting device 1 is to be defined. Such the range of the detectable rotation angle is to be defined by a least common multiple of the cycle of the detection signal obtained from the coil members 50 and 60 as a first rotation detecting unit and the cycle of the detection signal obtained from the MR element 72 as a second rotation detecting unit. In the case of the present embodiment, the cycle of the detection signal obtained from the coil members 50 and 60 (the first rotation detecting unit) is 180 degrees, and the cycle of the detection signal obtained from the MR element 72 (the second rotation detecting unit) is 138.4 degrees, and then the range of the detectable rotation angle becomes to be 1800 degrees as the least common multiple of such the cycles thereof. Moreover, the absolute rotation angle within the range of such the detectable rotation angle will be calculated according to the following processes.

First, a rotation angle is to be detected using the coil members 50 and 60 (referred to as a first rotation detecting unit hereinafter) within the range of such the detectable rotation angle. FIG. 4 shows a detection result of a rotation angle detected from the first rotation detecting unit, wherein a horizontal axis indicates a detectable rotation angle of a shaft S (simply referred to as a detectable rotation angle hereinafter) defined by 1800 degrees (between -900 degrees and +900 degrees) as a least common multiple of a cycle of the first rotation detecting unit and a cycle of the MR element 72 (referred to as a second rotation detecting unit hereinafter), and a vertical axis indicates a rotation angle periodically repeated and detected from the first rotation detecting unit. According to FIG. 4, it becomes clear that the first rotation detecting unit iteratively outputs the rotation angle of the shaft S with a cycle of 180 degrees within the rotation range of between -900 degrees and +900 degrees for the shaft S.

Next, a rotation angle is to be detected using the second rotation detecting unit within the range of the above mentioned detectable rotation angle. FIG. 5 shows a detection result of a rotation angle detected from the second rotation detecting unit, wherein a horizontal axis indicates a detectable rotation angle (between -900 degrees and +900 degrees) defined by a least common multiple of the cycle of the first rotation detecting unit and the cycle of the second rotation detecting unit, and a vertical axis indicates a rotation angle periodically repeated and detected from the second rotation detecting unit. According to FIG. 5, it becomes clear that the second rotation detecting unit iteratively outputs the rotation angle of the shaft S with a cycle of 138.4 degrees within the rotation range of between-900 degrees and +900 degrees for the shaft S.

Next, a value subtracted the result of the rotation angle detected from the second rotation detecting unit from the rotation angle detected from the first rotation detecting unit is to be evaluated. FIG. 6 is a diagram showing at an upper part thereof with superimposing the rotation angle detected from the first rotation detecting unit as shown in FIG. 4 and the rotation angle detected from the second rotation detecting unit as shown in FIG. 5, and showing at a lower part thereof as an output characteristic diagram with superimposing a value, as subtracting the result of the rotation angle detected from the second rotation detecting unit as shown in FIG. 5 from the rotation angle detected from the first rotation detecting unit as shown in FIG. 4, on the detection result as shown in FIG. 4. It becomes clear that according to the subtraction of individual outputs regarding a part sandwiched between a vertical axis X and a vertical axis Y in the subtracting process as shown in FIG. 6, a first output signal and a second output signal increase in a parallel direction within a range of such the part, and then a difference therebetween is shown as a constant step in the lower part of the figure. Moreover, FIG. 7 is an enlarged diagram of the lower part as shown in FIG. 6, wherein a horizontal axis indicates a detectable rotation angle (between -900 degrees and +900 degrees) regarding the rotation angle detecting device according to the present embodiment as shown in FIG. 1, and a vertical axis indicates a rotation angle periodically repeated and detected from the first rotation detecting unit, with the value subtracted the second output signal obtained from the second rotation detecting unit from the first output signal obtained from the first rotation detecting unit.

As it is obvious according to FIG. 7, the value subtracted the second output signal obtained from the second rotation detecting unit from the first output signal obtained from the first rotation detecting unit is to be formed as discontinuous stepped parts having a different height for each within the range of the detectable rotation angle. Here, the individual stepped parts has a slight width (variation) in a height direction at this step. And, this is an output error of the detection signal due to such as a backlash of the reducing mechanism part which transmits a rotation, from a first rotation body (the rotor 10 in the present embodiment) for which the first rotation detecting unit detects the rotation angle thereof, to a second rotation body (the third gear 13 in the present embodiment) for which the second rotation detecting unit detects the rotation angle thereof. However, individual steps has a unique height including such the slight width (variation) respectively, within the detectable rotation angle (between -900 degrees and +900 degrees), and then such the height of the individual steps is not to be duplicated even including the range of variation which the above mentioned individual steps has.

Next, an angle corresponding to each of the steps is to be divided using the smallest difference among differences between such the individual steps having different heights ((A - B) in the case of FIG. 7), and then converted to an integer value by rounding off therefor. FIG. 8 is a diagram showing a value of which such the individual steps is divided using the smallest difference (A - B) among the differences between the individual steps having different heights according to FIG. 7, and then converted to an integer value by rounding off therefor, with superimposing the detection result as shown in FIG. 4. In FIG. 8, a horizontal axis indicates a detectable rotation angle regarding the rotation angle detecting device 1 according to the present embodiment as shown in FIG. 1, and a vertical axis at the center indicates a rotation angle periodically repeated and detected from the first rotation detecting unit, with an axis at the right side indicates the value converted to the integer value by the above mentioned operation.

Next, a conversion is to be performed using a conversion table as shown in FIG. 9. Here, such the conversion table is for sorting the integer values arranged at random as shown in FIG. 8 into some groups defined by a plurality of integer values corresponding to the number of rotation of a measurable rotation body (the shaft S) within a detectable rotation angle, and then for rearranging in a staircase pattern corresponding to the number of rotation of the measurable rotation body regarding such the integer values arranged at random. And then the steps arranged at random as shown in FIG. 8 is to be rearranged in a staircase pattern within a range of the detectable rotation angle using such the conversion table. FIG. 10 is a diagram showing a rearrangement in a staircase pattern regarding the integer values as shown in FIG. 8 using the conversion table as shown in FIG. 9. Thus, by executing an algorithm for rearranging individual output signals comprised of such the individual steps including certain amount of errors and having a unique height respectively, to a staircase pattern with a primary integer value respectively, it becomes able to perform easily a signal processing according to a subsequent detection of an absolute rotation angle.

As it is obvious according to FIG. 10, it becomes able to evaluate the number of rotation of the rotor 10, that is to say, the shaft S within the range of the detectable rotation angle at every time when the individual rotation detecting units detects, by evaluating sequentially such the integer values using the above mentioned algorithm with the first output signal to be obtained from the first rotation detecting unit and with the second output signal to be obtained from the second rotation detecting unit. Moreover, it becomes able to evaluate a rotation angle of the rotor 10, that is to say, the shaft S corresponding to such the number of rotation using the detection result as shown in FIG. 4.

And then it becomes able to evaluate an absolute rotation angle of the shaft S within the detectable rotation angle (between -900 degrees and +900 degrees) using such the number of rotation and the rotation angle.

According to the rotation angle detecting device regarding the present embodiment, it becomes able to evaluate accurately an absolute rotation angle within a rotation angle range as a wide range defined by a least common multiple of a cycle of an output signal obtained from the first rotation detecting unit and a cycle of an output signal obtained from the second rotation detecting unit, by using such the algorithm.

Moreover, According to the rotation angle detecting device regarding the present embodiment, it becomes possible to design to reduce the number of components to comprise a rotation angle detecting device, to achieve a reduction in size regarding the rotation angle detecting device itself, and to detect the rotation angle in highly accurate, by evaluating the absolute rotation angle using such the algorithm.

Next, a rotation angle detecting device according to the second embodiment regarding the present invention will be described in detail below, based on the drawings. Here, regarding the rotation angle detecting device according to the second embodiment regarding the present invention, a configuration of the rotation angle detecting device itself is basically equivalent to that of the rotation angle detecting device according to the first embodiment. However, the different point is that the second output signal obtained from the second rotation detecting unit (the MR element) becomes to be decreased (increased) in a case where the first output signal obtained from the first rotation detecting unit (the coil members 50 and 60) is increased (decreased), due to increasing or decreasing as one-stage for the stage number of a gear in a reducing mechanism part. Therefore, a detailed description regarding the configuration of the rotation angle detecting device 2 is omitted, and only an algorithm for evaluating an absolute rotation value will be described in detail below.

At the first step, a range of the detectable rotation angle due to such the rotation angle detecting device 2 is to be defined. Such the range of the detectable rotation angle is to be defined by a least common multiple of the cycle of the detection signal obtained from the coil members 50 and 60 as the first rotation detecting unit and the cycle of the detection signal obtained from the MR element 72 as the second rotation detecting unit. In the case of the present embodiment, the cycle of the detection signal obtained from the coil members 50 and 60 (the first rotation detecting unit) is 180 degrees, and the cycle of the detection signal obtained from the MR element 72 (the second rotation detecting unit) is 138.4 degrees, and then the range of the detectable rotation angle becomes to be 1800 degrees as the least common multiple of such the cycles thereof. Moreover, the absolute rotation angle within the range of such the detectable rotation angle will be calculated according to the following processes.

First, a rotation angle is to be detected using the coil members 50 and 60 (referred to as a first rotation detecting unit hereinafter) within the range of such the detectable rotation angle. FIG. 11 shows a detection result of a rotation angle detected from the first rotation detecting unit, wherein a horizontal axis indicates a detectable rotation angle of a shaft S (simply referred to as a detectable rotation angle hereinafter) defined by 1800 degrees (between -900 degrees and +900 degrees) as a least common multiple of a cycle of the first rotation detecting unit and a cycle of the MR element 72 (referred to as a second rotation detecting unit hereinafter), and a vertical axis indicates a rotation angle periodically repeated and detected from the first rotation detecting unit. According to FIG. 11, it becomes clear that the first rotation detecting unit iteratively outputs the rotation angle of the shaft S with a cycle of 180 degrees within the rotation range of between -900 degrees and +900 degrees for the shaft S.

Next, a rotation angle is to be detected using the second rotation detecting unit within the range of the above mentioned detectable rotation angle. FIG. 12 shows a detection result of a rotation angle detected from the second rotation detecting unit, wherein a horizontal axis indicates a detectable rotation angle (between -900 degrees and +900 degrees) defined by a least common multiple of the cycle of the first rotation detecting unit and the cycle of the second rotation detecting unit, and a vertical axis indicates a rotation angle periodically repeated and detected from the second rotation detecting unit. As it is obvious according to FIG. 11 and FIG. 12, in the case where the output signal from the first rotation detecting unit is increased (decreased) according to the rotation of the shaft S, the output signal from the second rotation detecting unit is designed to be decreased (increased), meanwhile, in the case where the output signal from the first rotation detecting unit is decreased (increased), the output signal from the second rotation detecting unit is designed to be increased (decreased).

Next, a value added the rotation angle detected from the first rotation detecting unit and the rotation angle detected from the second rotation detecting unit is to be evaluated. FIG. 13 is an output characteristic diagram showing a value added the rotation angle detected from the first rotation detecting unit as shown in FIG. 11 and the rotation angle detected from the second rotation detecting unit as shown in FIG. 12 with superimposing the detection result as shown in FIG. 11, wherein a horizontal axis indicates a detectable rotation angle regarding the rotation angle detecting device according to the present embodiment as shown in FIG. 1, and a vertical axis indicates a rotation angle periodically repeated and detected from the first rotation detecting unit, with the value added the rotation angle detected from the first rotation detecting unit and the result of the rotation angle detected from the second rotation detecting unit.

As it is obvious according to FIG. 13, the value added the rotation angle detected from the first rotation detecting unit and the rotation angle detected from the second rotation detecting unit is to be formed as discontinuous stepped parts having a different height for each within the range of the detectable rotation angle. Here, the individual stepped parts has a slight width (variation) in a height direction at this step. And, this is an output error of the detection signal due to such as a backlash of the reducing mechanism part which transmits a rotation, from a first rotation body (the rotor 10 in the present embodiment) for which the first rotation detecting unit detects the rotation angle thereof, to a second rotation body (the third gear 13 in the present embodiment) for which the second rotation detecting unit detects the rotation angle thereof.

Next, the smallest difference among differences between such the individual steps having different heights ((C - D) in the case of FIG. 13) is to be calculated, an angle corresponding to each of such the steps is to be divided by such the smallest difference (C - D), and then converted to an integer value by rounding off therefor. FIG. 14 is a diagram showing a value of which such the individual steps is divided using the smallest difference (C - D) among the differences between the individual steps having different heights according to FIG. 13, and then converted to an integer value by rounding off therefor, with superimposing the detection result as shown in FIG. 11. In FIG. 14, a horizontal axis indicates a detectable rotation angle regarding the rotation angle detecting device 2 according to the present embodiment as shown in FIG. 1, and a vertical axis at the center indicates a rotation angle periodically repeated and detected from the first rotation detecting unit, with an axis at the right side indicates the value converted to the integer value by the above mentioned operation.

Next, a conversion is to be performed using a conversion table as shown in FIG. 15. Here, such the conversion table is for sorting the integer values arranged at random as shown in FIG. 14 into some groups defined by a plurality of integer values corresponding to the number of rotation of the shaft S within a detectable rotation angle, and then for rearranging in a staircase pattern corresponding to the number of rotation of the shaft S regarding such the integer values arranged at random. And then the steps arranged at random is to be rearranged in a staircase pattern within a range of the detectable rotation angle using such the conversion table. FIG. 16 is a diagram showing a rearrangement in a staircase pattern regarding the integer values as shown in FIG. 14 using the conversion table as shown in FIG. 15. Thus, by executing an algorithm for rearranging individual output signals comprised of such the individual steps including certain amount of errors and having a unique height respectively, to a staircase pattern with a primary integer value respectively, it becomes able to perform easily a signal processing according to a subsequent detection of an absolute rotation angle.

As it is obvious according to FIG. 16, it becomes able to evaluate the number of rotation of the rotor 10, that is to say, the shaft S within the range of the detectable rotation angle at every time when the individual rotation detecting units detects, by evaluating sequentially such the integer values using the above mentioned algorithm with the output signal to be obtained from the first rotation detecting unit and with the output signal to be obtained from the second rotation detecting unit. Moreover, it becomes able to evaluate a rotation angle of the rotor 10, that is to say, the shaft S corresponding to such the number of rotation using the detection result as shown in FIG. 11.

And then it becomes able to evaluate an absolute rotation angle within the range of the detectable rotation angle using such the number of rotation and the rotation angle.

According to the rotation angle detecting device regarding the present embodiment, it becomes able to evaluate accurately an absolute rotation angle within a rotation angle range as a wide range defined by a least common multiple of a cycle of an output signal obtained from the first rotation detecting unit and a cycle of an output signal obtained from the second rotation detecting unit, by using such the algorithm.

Moreover, According to the rotation angle detecting device regarding the present embodiment, it becomes possible to design to reduce the number of components to comprise a rotation angle detecting device, to achieve a reduction in size regarding the rotation angle detecting device itself, and to detect the rotation angle in highly accurate, by evaluating the absolute rotation angle using such the algorithm.

As described above, there are used the coil members and the MR element for the rotation detecting unit according to each of the embodiments, however, it is needless to say that it is not limited to such the rotation detecting unit if a rotation detecting unit can bring out the functions of the present invention.

Moreover, the rotation angle detecting device according to the present invention is suitable for a detection of a rotation angle of a steering device for vehicle. Furthermore, the rotation angle detecting device according to the present invention is applicable to any devices if it is required to evaluate a relative rotation angle of between rotation axes to rotate individually and/or a rotating torque, for such as a robot arm or the like.

## Claims

1. A rotation angle detecting device comprising:
a first rotation detecting unit;
a second rotation detecting unit,
that are for detecting continuously a rotation angle of a measurable rotation body with different cycles between each other; and
an operation unit for determining the rotation angle of the measurable rotation body by an operation using a first output signal generated by the first rotation detecting unit and a second output signal generated by the second rotation detecting unit,
wherein both of the first output signal and the second output signal are periodic signals, a cycle of the first output signal and a cycle of the second output signal are different from each other,
the first rotation detecting unit and the second rotation detecting unit are provided for increasing and decreasing the individual output signals, that are obtained in response to a rotation of the measurable rotation body, in a same direction corresponding to a rotational direction of the measurable rotation body,
the operation unit evaluates a difference by the operation for between the first output signal and the second output signal in response to the rotation of the measurable rotation body, and
the operation unit performs a detection of an absolute rotation angle of the measurable rotation body using the difference and within a detectable rotation angle defined by a least common multiple of the cycle of the first output signal and the cycle of the second output signal.

2. The rotation angle detecting device of claim 1,
wherein an (A - B) is evaluated using output differences obtained from the first output signal and the second output signal, that are the closest to each other as to be the A and the B among the obtained output differences,
integer values are obtained by dividing the individual output differences by the (A - B) and by rounding off therefor,
an error of the detection angle is cancelled, which is included in a difference between the first output signal obtained from the first rotation detecting unit and the second output signal obtained from the second rotation detecting unit, based on the integer values obtained thereby, and
a simplification is designed regarding a detection process for the absolute rotation angle.

3. A rotation angle detecting device further comprising:
a first rotation detecting unit;
a second rotation detecting unit,
that are for detecting continuously a rotation angle of a measurable rotation body with different cycles between each other; and
an operation unit for determining the rotation angle of the measurable rotation body by an operation using a first output signal generated by the first rotation detecting unit and a second output signal generated by the second rotation detecting unit, wherein both of the first output signal and the second output signal are periodic signals, a cycle of the first output signal and a cycle of the second output signal are different from each other,
the first rotation detecting unit and the second rotation detecting unit are provided for increasing and decreasing the individual output signals, that are obtained in response to a rotation of the measurable rotation body, in an opposite direction corresponding to a rotational direction of the measurable rotation body,
the operation unit evaluates a finite sum by the operation for between the first output signal and the second output signal in response to the rotation of the measurable rotation body, and the operation unit performs a detection of an absolute rotation angle of the measurable rotation body using the difference and within a detectable rotation angle defined by a least common multiple of the cycle of the first output signal and the cycle of the second output signal.

4. The rotation angle detecting device of claim 3,
wherein a (C - D) is evaluated using output sums obtained from the first output signal and the second output signal, that are the closest to each other as to be the C and the D among the obtained output sums,
integer values are obtained by dividing the individual output sums by the (C - D) and by rounding off therefor,
an error of the detection angle is cancelled, which is included in a finite sum of the first output signal obtained from the first rotation detecting unit and the second output signal obtained from the second rotation detecting unit, based on the integer values obtained thereby, and
a simplification is designed regarding a detection process for the absolute rotation angle.

5. A rotation angle detecting method for determining a rotation angle of a measurable rotation body by an operation using a first rotation detecting unit and a second rotation detecting unit, that are for detecting continuously the rotation angle of the measurable rotation body with different cycles between each other, and further using a first output signal generated by the first rotation detecting unit and a second output signal generated by the second rotation detecting unit, wherein both of the first output signal and the second output signal are periodic signals, a cycle of the first output signal and a cycle of the second output signal are different from each other, and the first output signal and the second output signal are changed for increasing and decreasing in a same direction corresponding to a rotational direction of the measurable rotation body respectively, comprising the steps of:
evaluating a difference between the first output signal and the second output signal;
determining the number of rotation for the measurable rotation body using the difference; and
performing a detection of an absolute rotation angle of the measurable rotation body within a detectable rotation angle defined by a least common multiple of the cycle of the first output signal and the cycle of the second output signal.

6. A rotation angle detecting method for determining a rotation angle of a measurable rotation body by an operation using a first rotation detecting unit and a second rotation detecting unit, that are for detecting continuously the rotation angle of the measurable rotation body with different cycles between each other, and further using a first output signal generated by the first rotation detecting unit and a second output signal generated by the second rotation detecting unit, wherein both of the first output signal and the second output signal are periodic signals, a cycle of the first output signal and a cycle of the second output signal are different from each other, and the first output signal and the second output signal are changed for increasing and decreasing in an opposite direction corresponding to a rotational direction of the measurable rotation body respectively, further comprising the steps of:
evaluating a finite sum of the first output signal and the second output signal;
determining the number of rotation for the measurable rotation body using the finite sum; and
performing a detection of an absolute rotation angle of the measurable rotation body within a detectable rotation angle defined by a least common multiple of the cycle of the first output signal and the cycle of the second output signal.
